Europäisches Patentamt

European Patent Office

Office européen des brevets

(19)

(11) Numéro de publication: **0 092 472**
**B1**

# (12) FASCICULE DE BREVET EUROPÉEN

(45) Date de publication du fascicule du brevet:
23.07.86

(21) Numéro de dépôt: **83400739.5**

(22) Date de dépôt: **14.04.83**

(51) Int. Cl.⁴: **B 60 N 1/06**

(54) **Appui-tête réglable notamment pour siège de véhicule automobile.**

(30) Priorité: **15.04.82 FR 8206791**

(43) Date de publication de la demande:
**26.10.83 Bulletin 83/43**

(45) Mention de la délivrance du brevet:
**23.07.86 Bulletin 86/30**

(84) Etats contractants désignés:
**DE GB IT**

(56) Documents cité:
**DE-A-2 100 676**
**DE-A-2 138 079**
**FR-A-2 470 021**

(73) Titulaire: **AUTOMOBILES CITROEN, 62 Boulevard Victor- Hugo, F-92200 Neuilly- sur- Seine (FR)**
Titulaire: **AUTOMOBILES PEUGEOT, 75, avenue de la Grande Armée, F-75116 Paris (FR)**

(72) Inventeur: **Baille, Michel, 27 rue Eugène Derrien, Pavillon 16, F-94400 Vitry sur Seine (FR)**

(74) Mandataire: **Boivin, Claude, 9, rue Edouard- Charton, F-78000 Versailles (FR)**

EP 0 092 472 B1

## Description

La présente invention a pour objet un appui-tête pour siège, notamment pour siège de véhicule automobile, qui présente les avantages d'être de construction simple, léger et peu coûteux.

Le brevet françcais FR—A—2 470 021 décrit un appui-tête comprenant une armature comportant une colonne de fixation, destinée à être engagée dans un tube de maintien portè par le bâti du siège, un corps d'appui de l'appui-tête, et one masse d'amortissement en matière plastique expansée qui recouvre le corps d'appui et qui est recouverte d'un habillage décoratif.

La présente invention a pour objet un appui-tête de ce type qui est particulièrement simple et léger et dans lequel la masse d'amortissement est bien ancrée au corps d'appui.

Cet appui-tête est caractérisé en ce que le corps d'appui est constitué par une coquille galbée qui présente une série de nervures transvales parallèles et des ajours ménagés de chaque côté de la coquille, entre les nervures, et en ce que la colonne de fixation est composée de deux voiles parallèles réunis entre peux par une cloison médiane perpendiculaire voiles et par une série de cloisons transversales parallèles entre elles.

Les nervures et les ajours jouent un double rôle. Ils assurent la rigidité de l'ensemble de l'appui-tête tout en l'allégeant. Par ailleurs, ils assurent un excellent ancrage de la masse d'amortissement en matière plastique sur la coquille qui forme corps d'appui.

La largeur des nervures va de préférence allant en diminuant du centre vers leur extrémités. La rigidité de la coquille est ainsi plus faible sur ses bords que sur sa partie centrale, ce qui améliore le confort.

Pour protéger la masse d'amortissement des efforts verticaux plongeants et pour améliorer l'esthétique, l'appui-tête peut comporter en outre une pièce de finition constituée par un fourreau ou manchon qui est emmanché sur la colonne de fixation et comporte extérieurement un flasque s'étendant de part et d'autre du fourreau, suivant la même orientation que la coquille et venant en appui contre un rebord en équerre prèvu à la partie inférieur de cette coquille, la pièce de finition étant munie de moyens d'encliquetage propres à relier l'armature au fourreau et au flasque.

Les moyens d'encliquetage peuvent être constitués par des clips portés par le flasque et pouvant venir s'engager sur le rebord en équerre de la coquille et/ou par un becquet faisant saïsant saillie à l'extérieur du fôrrueau et pouvant venir s'engager sur la nervure inférieure de la coquille.

Pour permettre le verrouillage de l'appui-tête dans la position en hauteur désirée, la partie inférieure de la colonne peut comporter une languette saillante souple munie d'un becquet d'encliquetage et pouvant s'engager dans des évidements ou ouvertures prévus dans le tube de maintien.

Pour empecher le retrait de l'appui-tête après sa mise en place dans le tube de maintien, la partie inférieure de la colonne peut comporter extérieurement des pattes flexibles d'arrêt pouvant s'engager dans des lumières longitudinales de tube de maintien.

On a décrit ci-après, à titre d'exemple non limitatif, un mode de réalisation de l'appui-tête selon l'invention, avec référence au dessin annexé dans lequel:

La Figure 1 est une vue en perspective de l'armature et de la pièce de fixation, celle-ci étant représentée séparée de l'armature.

Les Figures 2 et 3 sont des coupes horizantales et verticales, respectivement suivant II—II et III—III de la Figure 1, la pièce de finition étant assujettie à l'armature, mais la masse d'amortissement n'étant pas représentée.

La Figure 4 est une vue latérale de l'ensemble de l'appui-tête.

Tel qui'il est reprèsentè au dessin, l'appui-tête selon l'invention comporte une armature désignée d'une façon générale par la référence 1 et qui est en matière plastique injectée sans inserts. Cette armature comporte une colonne de fixation 2 formée de deux voiles restilignes parallèles 3*a* et 3*b* qui sont réuis à l'autre par une cloison médiane longitudinale 4 perpendiculaire aux voiles et par une série de cloisons transversales parallèles 5.

La colonne est prolongée à sa partie inférieure par une paroi de guidage 6 dans laquelle est formée une languette saillante souple 7 comportant un becquet d'encliquetage 8. Cette partie inférieure est destinée à être emmanchée dans un tube de maintien 9 fixé sur un dossier de siège et comportant une série d'ouvertures transversales 10 dans lesquelles peut s'engager l'arête du becquet 8, afin de maintenir l'appui-tête dans la position de réglage en hauteur choisie.

A sa partie supérieure, le voile avant 3*a* et prolongé de chaque côté de façon à former une coquille galbée 11 dont la concavité est dirigée ves l'avant. Cette coquille présente une série de nervures transversales parallèles 12 dont la largeur va en diminuant du centre vers les extrémités, et des ajours 12 ménagés de chaque côte de la coquille, entre les nervures 12.

La coquille 11 s'étend vers le bas, de part et d'autre de la colonne 2. Sa périphérie inférieure présente un rebord en équerre 14 à chacune des extrémités duquel est prévu un taquet comprenant une paroi verticale 15 et une paroi 16 repliée vers l'intérieur de la coquille.

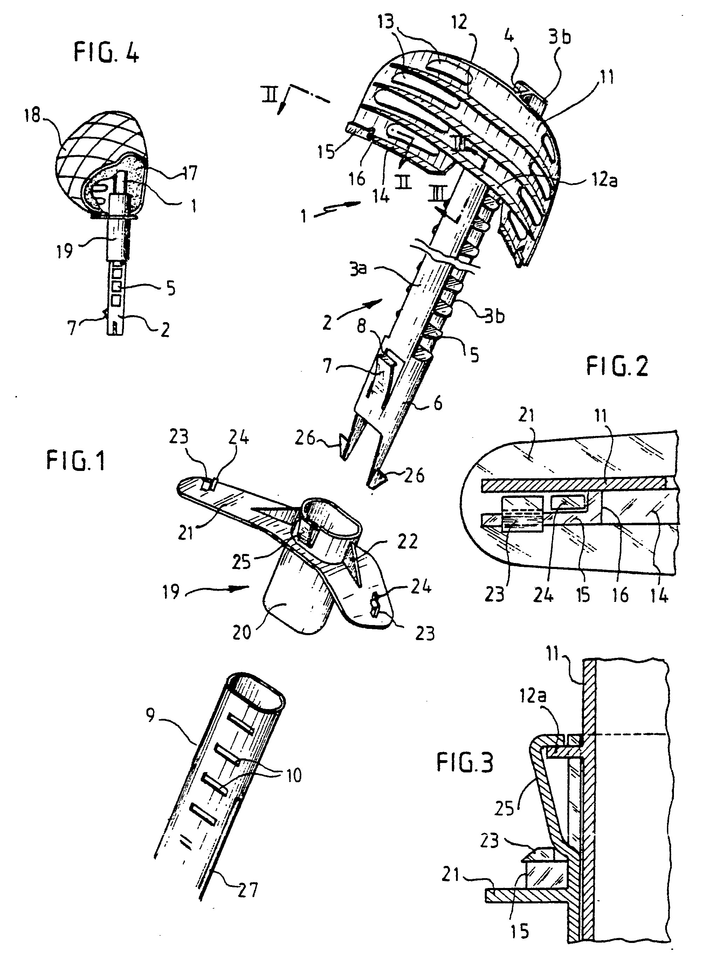

Une masse d'amortissement, ou "pelote" 17 (Figure 4) en matière plastique expansée est surmoulée sur la coquille 11 qui est ainsi noyée dans celle-ci et est revêtue d'un garnissage décoratif 18. Les nervures 12 et les ajours 13 assurent un ancrage de cette pelot sur la coquille; en outre, les nervures donnent une rigidité transversale à la coquille tout en assurant une certaine souplesse à ses zones latérales.

La pelote 17 est protégée des efforts verticaux plongeants élevés par une pièce de finition 19 en matière plastique moulée, éventuellement taillée dans la masse. Cette pièce est constituée par un fourreau 20 qui peut coulisser sur la colonne 2. A une distance de son extrémité supérieure sensiblement égale à l'écart entre la nervure 12a, la plus basse de la coquille 11 et le rebord en équerre 14, le fourreau 20 comporte extérieurement un flasque 21 qui s'étend de part et d'autre du fourreau, suivant la même orientation que la coquille, et est perpendiculaire à l'axe dudit fourreau; ce flasque est rigidifié par des goussets de renfort 22.

Le flasque porte à ses extrémités deux clips 23 et des pions de centrage 24. Un becquet élastique d'encliquetage 25 fait saillie à la partie supérieure du fourreau 20.

Après moulage de la pelote 17 et du garnissage 18, la pièce de finition 19 est emmanchée sur la colonne 2 de l'armature jusqu'à ce que le flasque 21 vienne buter contre le rebord en équerre 14. En fin de mouvement, les clips 23 viennent agriper les parois 15 du taquet et le becquet élastique 25 s'engage sur la nervure inférieure 12a de la coquille, ce qui solidarise la pièce de finition 19 et l'armature 1. En même temps les pions 24 viennent au contact des faces intérieures des parois 16, en assurant ainsi le centrage et l'immobilisation transversale de la pièce de finition (voir Figures 3 et 4). La pièce de finition est alors pratiquement le seule partie rigide de l'appui-tête qui est visible dans l'habitacle.

A la Figure 1, la paroi 6 comporte extérieurement des pattes flexibles d'arrêt 26 qui présentent des becs obliques convergents et peuvent s'engager dans des lumières longitudinales 27 ménagées dans le tube 9. Au moment du montage les pattes 26 s'escamotent dans le tube 9 puis s'engagent dans les lumières 27 en reprenant leur position initiale. L'appui-tête ne peut alors plus être retiré du tube 9.

## Revendications

1. Appui-tête pour siège, notamment pour sièges de véhicules automobiles, comprenant une armature (1) comportant une colonne de fixation (2), destinée à être engagée dans un tube de maintien (9) porté par le bâti du siège, un corps d'appui (11) de l'appui-tête, et une masse d'amortissement (17) en matière plastique expansée qui recouvre le corps d'appui (11) et/qui est recouverte d'un habillage décoratif (18), caractérisé en ce que le corps d'appui (11) est constitué par une coquille galbée qui présente une serié de nervures transversales parallèles (12) et des ajours (13) ménagés de chaque côté de la coquille, entre les nervures (12) et en ce que la colonne de fixation (2) est composée de deux voiles (3a et 3b) parallèles, réunis entre eux par une cloison médiane (4) perpendiculaire aux voiles et par une série de cloisons transversales (5) parallèles, entre elles.

2. Appui-tête selon la revendication 1, caractérisé en ce que la largeur des nervures (12) va en diminuant du centre ves leurs extrémités.

3. Appui-tête selon la revendication 1 ou 2, caractérisé en ce qu'il comporte en outre une pièce de finition (19) constituée par un fourreau ou manchon (20) qui est emmanché sur la colonne de fixation (2) et comporte extérieurement un flasque (21) s'étendant de part et d'autre du fourreau, suivant la même orientation que la coquille et venant en appui contre un rebord en équerre (14) prévu à la partie inférieure de cette coquille, la pièce de finition (19) étant munie de moyens d'encliquetage (23, 24) propres à relier l'armature (1) au fourreau (20) et au flasque (21).

4. Appui-tête selon la revendicatin 3, caractérisé en ce que les moyens d'encliquetage sont constitués par des clips (23) portés par le flasque (21) et pouvant venir s'engager sur le rebord en équerre (14) de la coquille (11) et/ou par un becquet (25) faisant sailie à l'extérieur du forreau et pouvant venir s'engager sur la nervure inférieure (12a) de la coquille.

5. Appui-tête selon la revendication 3 ou 4, caractérisé en ce que le flasque (21) porte des pions de centrage (24) venant au contact des parois de butée (16) prévues à la partie inférieure de la coquille.

6. Appui-tête selon l'une revendications précédentes, caractérisé en ce que la partie inférieure de la colonne (2) comporte une languette saillante souple (7) munie d'un becquet d'encliquetage (8) et pouvant s'engager dans des évidements ou ouvertures (10) prévus dans le tube de maintien (9).

7. Appui-tête selon l'une des revendications précédentes, caractérisé en ce que la partie inférieure de la colonne (2) porte extérieurement des pattes flexibles d'arrêt (26) pouvant s'engager dans des lumières longitudinales (27) du tube de maintien (9).

## Patentansprüche

1. Kopfstütze für Sitze, insbesondere für Sitze von Kraftfahrzeugen, mit einem Beschlagteil (1), das eine Befestigungssäule (2) aufweist, die dazu bestimmt ist, in einem vom Grundgestell des Sitzes getragenen Halterohr (9) geführt zu werden, sowie einen Stützkörper (11) der Kopfstütze und eine Dämpfungsmasse (17) aus geschäumtem Kunstoffmaterial, welche den Stützkörper (11) bedeckt und die von einer dekorativen Umhüllung (18) bedeckt ist, dadurch gekennzeichnet, daß de Stützkörper (11) aus eine ausgebauchten Schale besteht, die eine Reihe von parallelen Querrippen (12) und Durchbrechungen (13) an jeder Seite der Schale zwischen den Rippen (12) aufweist und daß die Befestigungssäule (2) aus zwei parallelen Streifen (3a und 3b) zusammengesetzt ist, die durch eine auf der Mittellinie senkrecht zu den Streifen angeordnete Zwischenwand (4) und durch eine Reihe von untereinander parallelen, in Querrichtung verlaufenden Zwischenwänden (5) miteinander verbunden sind.

2. Kopfstütze nach Anspruch 1, dadurch gekennzeichnet, daß die Breite der Rippen (12) sich von der Mitte nach ihren Enden verkleinert.

3. Kopfstütze nach Anspruch 1 oder 2, dadurch gekennzeichnet, daß sie außerdem ein Endstück (19) aufweist, das aus einer Hülse oder Muffe (20) besteht, die auf die Befestigungssäule (2) aufgezogen ist und an ihrer Außenseite einen sich zu beiden Seiten dur Hülse erstreckenden Flansch (21) aufweist, der die gleiche Orientierung besitzt wie die Schale und sich an einer um Unterteil dieser Schale vorgesehenen als Winkelstück ausgebildeten Randleiste (14) abstützt, wobei das Endstück (19) mit Einrastmitteln (23, 24) versehen ist, die geeignet sind, das Beschlagteil (1) mit der Hülse (20) und dem Flasch (21) zu verbinden.

4. Kopfstütze nach Anspruch 3, dadurch gekennzeichnet, daß die Einrastmittel aus vom Flansch (21) getragenen Halteclips (23) bestehen, die an der Randleiste (14) de Schale (11) angrefein, und/oder aus einem Blatt (25), das an der Außenseite der Hülse herausragt und an der unteren Rippe (12a) de Schale angreifen kann.

5. Kopfstütze nach Anspruch 3 oder 4, dadurch gekennzeichnet, daß der Flansch (21) Zentrierstifte (24) trägt, die mit Anschlagwänden (16) in Kontakt kommen, welche am Unterteil de Schale vorgesehen sind.

6. Kopfstütze nach einem der vorhergehenden Ansprüche, dadurch gekennzeichnet, daß das Unterteil de Säule (2) eine herausragende flexible Zunge (7) aufweist, die mit einem Einrastblatt (8) versehen ist und in Ausnehmungen oder Öffnungen (10) eingreifen kann, welche im Halterohr (9) vorgesehen sind.

7. Kopfstütze nach einem der vorhergehenden Ansprüche, dadurch gekennzeichnet, daß das Unterteil der Säule (2) an der Außenseite flexible Verriegelungslaschen (26) aufweist, die in Längsschlitze (27) des Halterohrs (9) eingreifen können.

**Claims**

1. Headrest for seat, particularly for motor vehicle seats, comprising frame (1) having a fixing column (2) for engagement in a holding tube (9) carried by the frame of the seat, and a support body (11) of the headrest and a shock absorbing mass (17) made from an expanded plastic material which covers the support body (11) and which is covered with a decorative covering (18), characterized in that the support body (11) is formed by a curved shell which has a series of transverse parallel ribs (12) and openings (13) formed on each side of the shell between the ribs (12) and in that the fixing column (2) is formed of two parallel webs (3a and 3b) joined together by a median dividing wall (4) perpendicular to the webs and by a series of transverse dividing walls (5) parallel with each other.

2. Headrest according to claim 1, characterized in that the width of the ribs (12) gradually decreases from the center to their ends.

3. Headrest according to claim 1 or 2, characterized in that it further comprises a finishing part (19) formed by a sleeve or socket (20) which is fitted on the fixing column (2) and comprises externally a flange (21) extending on each side of the sleeve, in the same orientation as the shell and bearing against a right angle edge (14) provided at the lower part of this shell, the finishing piece (19) being provided with snap-fit means (23, 24) for connecting the frame (1) to the sleeve (20) and to the flange (21).

4. Headrest according to claim 3, characterized in that the snap-fittings are formed by clips (23) on the flange (21) which come into engagement on the right angle edge (14) of the shell (11) and/ or by a catch (25) projecting outwardly of the sleeve and coming into engagement on the lower rib (12a) of the shell.

5. Headrest according to claim 3 or 4, characterized in that the flange (21) comprises centering studs (24) coming into contact with the abutment walls (16) provided at the lower part of the shell.

6. Headrest according to one of the preceding claims, characterized in that the lower part of the column (2) comprises a flexible projecting tongue (7) having a snap-fit catch (8) and being engageable in apertures or openings (10) provided in the holding tube (9).

7. Headrest according to one of the preceding claims, characterized in that the lower part of the column (2) comprises externally flexible stop lugs (26) engageable in longitudinal apertures (27) in the holding tube (9).

FIG. 4

FIG. 1

FIG. 2

FIG. 3